(19) Europäisches Patentamt
European Patent Office
Office européen des brevets

(11) EP 2 011 395 A1

(12) # EUROPEAN PATENT APPLICATION

(43) Date of publication:
**07.01.2009 Bulletin 2009/02**

(21) Application number: **07111583.6**

(22) Date of filing: **03.07.2007**

(51) Int Cl.:
***A01N 43/58*** *(2006.01)* ***A01P 3/00*** *(2006.01)*
*A01N 43/84* *(2006.01)* *A01N 43/653* *(2006.01)*
*A01N 43/40* *(2006.01)* *A01N 43/30* *(2006.01)*

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Bayer CropScience AG**
**40789 Monheim (DE)**

(72) Inventors:
- **Gaertzen, Oliver, Dr.**
  **50668 Köln (DE)**
- **Seitz, Thomas, Dr.**
  **40764 Langenfeld (DE)**
- **Wachendorff-Neumann, Ulrike, Dr.**
  **56566 Neuwied (DE)**
- **Dahmen, Peter, Dr.**
  **41470 Neuss (DE)**
- **Suty-Heinze, Anne**
  **40764 Langenfeld (DE)**

(54) **Active compound combinations**

(57) The invention relates to active compound combinations, in particular within a fungicide composition, which comprises (A) a compound of formula (I) and at least one further fungicidally active compound (B) acting as ergosterol biosynthesis inhibitor. Moreover, the invention relates to a method for curatively or preventively controlling the phytopathogenic fungi of plants or crops, to the use of a combination according to the invention for the treatment of seed, to a method for protecting a seed and not at least to the treated seed.

EP 2 011 395 A1

## Description

The invention relates to active compound combinations, in particular within a fungicide composition, which comprises (A) a compound of formula (I) and a further fungicidally active compound (B) acting as ergosterol biosynthesis inhibitor. Moreover, the invention relates to a method for curatively or preventively controlling the phytopathogenic fungi of plants or crops, to the use of a combination according to the invention for the treatment of seed, to a method for protecting a seed and not at least to the treated seed.

WO 05/121 104 and WO 06/001 175 each disclose the use of arylpyridazines according to formula (I) as fungicides and their preparation. The activity of these compounds is good; however, at low application rates it is sometimes unsatisfactory.

Furthermore, it is known that numerous compounds selected from the group of ergosterol biosynthesis inhibitor have fungicidal properties (cf., for example, EP-A 0 403 45). However, the activity of these compounds is likewise not always satisfactory.

Fungicidal combinations comprising at least one ergosterol biosynthesis inhibitor and at least one further known fungicidally active ingredient are known (e.g. EP-A 0 316 970). However, the activity of these combinations is likewise not always satisfactory.

Since, moreover, the environmental and economic requirements imposed on modem-day fungicides are continually increasing, with regard, for example, to the spectrum of action, toxicity, selectivity, application rate, formation of residues, and favourable preparation ability, and since, furthermore, there may be problems, for example, with resistances, a constant task is to develop new fungicide agents which in some areas at least have advantages over their known counterparts.

The invention provides active compound combinations/compositions which in some aspects at least achieve the stated objectives.

It has now been found, surprisingly, that the combinations according to the invention not only bring about the additive enhancement of the spectrum of action with respect to the phytopathogen to be controlled that was in principle to be expected but achieves a synergistic effect which extends the range of action of the component (A) and of the component (B) in two ways. Firstly, the rates of application of the component (A) and of the component (B) are lowered whilst the action remains equally good. Secondly, the combination still achieves a high degree of phytopathogen control even where the two individual compounds have become totally ineffective in such a low application rate range. This allows, on the one hand, a substantial broadening of the spectrum of phytopathogens that can be controlled and, on the other hand, increased safety in use.

However, besides the actual synergistic action with respect to fungicidal activity, the pesticidal combinations according to the invention also have further surprising advantageous properties which can also be described, in a wider sense, as synergistic activity. Examples of such advantageous properties that may be mentioned are: a broadening of the spectrum of fungicidal activity to other phytopathogens, for example to resistant strains; a reduction in the rate of application of the active ingredients; adequate pest control with the aid of the compositions according to the invention, even at a rate of application at which the individual compounds are totally ineffective; advantageous behaviour during formulation or upon application, for example upon grinding, sieving, emulsifying, dissolving or dispensing; increased storage stability; improved stability to light; more advantageuos degradability; improved toxicological or ecotoxicological behaviour; improved characteristics of the useful plants including: emergence, crop yields, more developed root system, tillering increase, increase in plant height, bigger leaf blade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other advantages familiar to a person skilled in the art.

The combination according to the invention can also provide an improved systemicity to the active compounds that are used. Indeed, even if some of the used fungicide compounds do not possess any or a satisfying systemicity, within the composition according to the invention these compounds can exhibit such a property.

In a similar manner, the combination according to the invention can allow an increased persistence of the fungicide efficacy of the active compounds that are employed.

Another advantage of the combination according to the invention relies in that an increased curativity is achievable.

Accordingly, the present invention provides a combination comprising:

(A) At least one arylpyridazine according to formula (I)

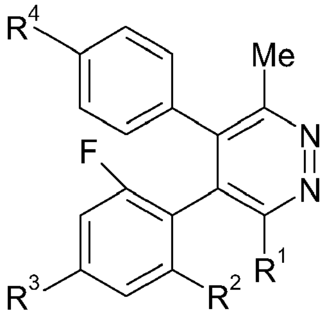

(I),

wherein

$R^1$ is selected from the group consisting of $C_1$-$C_4$-Alkyl and halogen and

$R^2$ is selected from the group consisting of hydrogen and halogen,

$R^3$ is selected from the group consisting of hydrogen, halogen and $C_1$-$C_4$-Alkoxy,

$R^4$ is selected from the group consisting of hydrogen, chlorine and methyl

and salts thereof,
and

(B) at least one further active compound selected from the group of inhibitors of ergosterol biosynthesis consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl) cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2) and salts thereof.

Preference is given to combinations comprising compounds of the formula (I), wherein

$R^1$ is selected from the group consisting of methyl and chlorine and
$R^2$ is selected from the group consisting of hydrogen, bromine, chlorine and fluorine,
$R^3$ is selected from the group consisting of hydrogen, bromine, chlorine, fluorine, methoxy andEtoxy,
$R^4$ is selected from the group consisting of hydrogen, chlorine and methyl
and salts thereof.

Particular preference is given to combinations comprising compounds of the formula (I), wherein

$R^1$ is selected from the group consisting of methyl and chlorine and

$R^2$ is selected from the group consisting of hydrogen and chlorine and fluorine,
$R^3$ is selected from the group consisting of hydrogen, chlorine, fluorine and methoxy,
$R^4$ is selected from the group consisting of chlorine and methyl

and salts thereof.

Especially preference is given to combinations comprising compounds of the formula (I), wherein

$R^1$ is selected from the group consisting of methyl and chlorine and
$R^2$ is selected from the group consisting of hydrogen and chlorine and fluorine,
$R^3$ is selected from the group consisting of hydrogen, fluorine and methoxy,
$R^4$ is selected from the group consisting of chlorine and methyl

and salts thereof.

Particularly preferred are combinations wherein the compound of formula (I) is selected from the group consisting of:

(A-1) 3-chloro-5-(4-chlorophenyl)-6-methyl-4-(2,4,6-trifluorophenyl)pyridazine,
(A-2) 3-chloro-5-(4-chlorophenyl)-6-methyl-4-(2,6-difluorophenyl)pyridazine,
(A-3) 3-chloro-5-(4-methylphenyl)-6-methyl-4-(2"4,6-trifluorophenyl)pyridazine,
(A-4) 4-(4-chlorophenyl)-3,6-dimethyl-5-(2,4,6-trifluorophenyl)pyridazine,
(A-5) 4-(4-chlorophenyl)-3,6-dimethyl-5-(2,6-difluorophenyl)pyridazine,
(A-6) 4-(4-methylphenyl)-3,6-dimethyl-5-(2,4,6-trifluorophenyl)pyridazine

and salts thereof.

Compounds A1 to A-3 are known from WO 05/121 104. Compounds A-4 to A-6 are known from WO 06/001 175.

Preference is further given to combinations comprising an ergosterol synthesis inhibiting compound (B) selected from the list consisting oftriazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

Preference is further given also to combinations comprising an ergosterol synthesis inhibiting compound (B) selected from the list consisting of Aldimorph (1704-28-5), Dodemorph (1593-77-7), Dodemorph acetate (31717-87-0), Fenpropidin (67306-00-7), Fenpropimorph (67306-03-0), Piperalin (3478-94-2), Spiroxamine (118134-30-8), Tridemorph (81412-43-3) and salts thereof.

Preference is further given also to combinations comprising an ergosterol synthesis inhibiting compound (B) selected from the list consisting of Fenhexamid (126833-17-8) and salts thereof. Preference is further given also to combinations comprising an ergosterol synthesis inhibiting compound (B) selected from the list consisting of Naftifine (65472-88-0), Terbinafine (91161-71-6) and Pyributicarb (88678-67-5) and salts thereof.

Particular preference is given to combinations comprising an active compound (B) selected from the list consisting of Bitertanol (55179-31-2), Epoxiconazole (106325-08-0), Fenpropidin (67306-00-7), Fenpropimorph (67306-03-0), Fluquinconazole (136426-54-5), Metconazole (125116-23-6), Prothioconazole (178928-70-6), Spiroxamine (118134-30-8) Tebuconazole (107534-96-3) and Triadimenol (89482-17-7) and salts thereof.

Very particular preference is given to combinations comprising an active compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

Very particular preference is also given to combinations comprising an active compound (B) selected from the list consisting of Fenpropidin (67306-00-7), Fenpropimorph (67306-03-0) and Spiroxamine (118134-30-8) and salts

thereof.

For most of the compounds of group (B) we refer to The Pesticide Manual, 13th edition, 2003. The compounds (B) are listed by common names followed by the corresponding CAS-numbers in parenthesis. If no common name was available at the priority date of the application compounds (B) are listed by IUPAC-names followed by the corresponding CAS-numbers in parenthesis.

Particularly preferred combinations are listed below:

3-chloro-5-(4-chlorophenyl)-6-methyl-4-(2,4,6-trifluorophenyl)pyridazine (**A-1**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof.

3-chloro-5-(4-chlorophenyl)-6-methyl-4-(2,6-difluorophenyl)pyridazine (**A-2**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof

3-chloro-5-(4-chlorophenyl)-6-methyl-4-(2,4,6-trifluorophenyl)pyridazine (**A-3**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9),

Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof.

4-(4-chlorophenyl)-3,6-dimethyl-5-(2,4,6-trifluorophenyl)pyridazine (**A-4**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof.

4-(4-chlorophenyl)-3,6-dimethyl-5-(2,6-difluorophenyl)pyridazine (**A-5**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof.

4-(4-methylphenyl)-3,6-dimethyl-5-(2,4,6-trifluorophenyl)pyridazine (**A-6**) and at least one ergosterol synthesis inhibiting compound (B) selected from the list consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine (118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2), N-Ethyl-N-Methyl-N'-{2-Methyl-5-(Difluormethyl)-4-[3-(Trimethylsilyl)propoxy]phenyl}-imidoformamid; N-Ethyl-N-Methyl-N'-{2-Methyl-5-(Trifluormethyl)-4-[3-(Trimethylsilyl) propoxy] phenyl}-imidoformamid and salts thereof.

Also particularly preferred combinations are listed below:

3-chloro-5-(4-chlorophenyl)-6-methyl-4-(2,4,6-trifluorophenyl)pyridazine (**A-1**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

3-chloro-5-(4-chlorophenyl)-6-methyl-4-(2,6-difluorophenyl)pyridazine (**A-2**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

3-chloro-5-(4-chlorophenyl)-6-methyl-4-(2,4,6-trifluorophenyl)pyridazine (**A-3**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-

zole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

4-(4-chlorophenyl)-3,6-dimethyl-5-(2,4,6-trifluorophenyl)pyridazine (**A-4**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

4-(4-chlorophenyl)-3,6-dimethyl-5-(2,6-difluorophenyl)pyridazine (**A-5**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

4-(4-methylphenyl)-3,6-dimethyl-5-(2,4,6-trifluorophenyl)pyridazine (**A-6**) and at least one ergosterol synthesis inhibiting compound (B) selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

Very particularly preferred combinations are listed below:

3-chloro-5-(4-chlorophenyl)-6-methyl-4-(2,4,6-trifluorophenyl)pyridazine (**A-1**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

3-chloro-5-(4-chlorophenyl)-6-methyl-4-(2,6-difluorophenyl)pyridazine (**A-2**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

3-chloro-5-(4-chlorophenyl)-6-methyl-4-(2,4,6-trifluorophenyl)pyridazine (**A-3**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

4-(4-chlorophenyl)-3,6-dimethyl-5-(2,4,6-trifluorophenyl)pyridazine (**A-4**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

4-(4-chlorophenyl)-3,6-dimethyl-5-(2,6-difluorophenyl)pyridazine (**A-5**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

4-(4-methylphenyl)-3,6-dimethyl-5-(2,4,6-trifluorophenyl)pyridazine (**A-6**) and at least one ergosterol synthesis inhibiting compound (B) selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

Also very particularly preferred combinations are listed below:

3-chloro-5-(4-chlorophenyl)-6-methyl-4-(2,4,6-trifluorophenyl)pyridazine (**A-1**) and at least one ergosterol synthesis inhibiting compound (B) selected from the list consisting of Fenpropidin (67306-00-7), Fenpropimorph (67306-03-0) and Spiroxamine (118134-30-8) and salts thereof.

3-chloro-5-(4-chlorophenyl)-6-methyl-4-(2,6-difluorophenyl)pyridazine (**A-2**) and at least one ergosterol synthesis inhibiting compound (B) selected from the list consisting of Fenpropidin (67306-00-7), Fenpropimorph (67306-03-0) and Spiroxamine (118134-30-8) and salts thereof.

3-chloro-5-(4-chlorophenyl)-6-methyl-4-(2,4,6-trifluorophenyl)pyridazine (**A-3**) and at least one ergosterol synthesis inhibiting compound (B) selected from the list consisting of Fenpropidin (67306-00-7), Fenpropimorph (67306-03-0) and Spiroxamine (118134-30-8) and salts thereof.

4-(4-chlorophenyl)-3,6-dimethyl-5-(2,4,6-trifluorophenyl)pyridazine (**A-4**) and at least one ergosterol synthesis inhibiting compound (B) selected from the list consisting of Fenpropidin (67306-00-7), Fenpropimorph (67306-03-0) and Spiroxamine (118134-30-8) and salts thereof.

4-(4-chlorophenyl)-3,6-dimethyl-5-(2,6-difluorophenyl)pyridazine (**A-5**) and at least one ergosterol synthesis inhibiting compound (B) selected from the list consisting of Fenpropidin (67306-00-7), Fenpropimorph (67306-03-0) and Spiroxamine (118134-30-8) and salts thereof.

4-(4-methylphenyl)-3,6-dimethyl-5-(2,4,6-trifluorophenyl)pyridazine (**A-6**) and at least one ergosterol synthesis inhibiting compound (B) selected from the list consisting of Fenpropidin (67306-00-7), Fenpropimorph (67306-03-0) and Spiroxamine (118134-30-8) and salts thereof.

In conjunction with the present invention compounds (A) and (B) are different from each other.

If the active compounds in the active compound combinations according to the invention are present in certain

weight ratios, the synergistic effect is particularly pronounced. However, the weight ratios of the active compounds in the active compound combinations can be varied within a relatively wide range. In the combinations according to the invention the compounds A and B are present in a synergistically effective weight ratio of A:B in a range of 100:1 1 to 1:100, preferably in a weight ratio of 50:1 to 1:50, most preferably in a weight ratio of 20:1 to 1:20. Furthermore in the combinations according to the invention the compounds A and B are present in a synergistically effective weight ratio of A:B in a range of 100:1 to 1:50, 100:1 to 1:20, 50:1 to 1:100,50:1 to 1:20, 20:1 to 1:100, 20:1 to 1:50. Further ratios of A:B which can be used according to the present invention with increasing preference in the order given are: 95:1 to 1:95, 95:1 to 1:90, 95:1 to 1:85, 95:1 to 1:80, 95:1 to 1:75, 95:1 to 1:70, 95:1 to 1:65, 95:1 to 1:60, 95:1 to 1:55, 95:1 to 1:50, 95:1 to 1:45, 95:1 to 1:40, 95:1 to 1:35, 95:1 to 1:30, 95:1 to 1:25, 95:1 to 1:20, 95:1 to 1:15, 95:1 to 1:10, 95:1 to 1:5, 95:1 to 1:4, 95:1 to 1:3, 95:1 to 1:2, 90:1 to 1:90, 90:1 to 1:95, 90:1 to 1:85, 90:1 to 1:80, 90:1 to 1:75, 90:1 to 1:70, 90:1 to 1:65, 90:1 to 1:60, 90:1 to 1:55, 90:1 to 1:50, 90:1 to 1:45, 90:1 to 1:40, 90:1 to 1:35, 90:1 to 1:30, 90:1 to 1:25, 90:1 to 1:20, 90:1 to 1:15, 90:1 to 1:10, 90:1 to 1:5, 90:1 to 1:4, 90:1 to 1:3, 90:1 to 1:2, 85:1 to 1:85, 85:1 to 1:95, 85: 1 to 1:90, 85:1 to 1:80, 85:1 to 1:75, 85:1 to 1:70, 85:1 to 1:65, 85:1 to 1:60, 85:1 to 1:55, 85:1 to 1:50, 85:1 to 1:45, 85: 1 to 1:40, 85:1 to 1:35, 85:1 to 1:30, 85:1 to 1:25, 85:1 to 1:20, 85:1 to 1:15, 85:1 to 1:10, 85:1 to 1:5, 85:1 to 1:4, 85:1 to 1:3, 85:1 to 1:2, 80:1 to 1:80, 80:1 to 1:95, 80:1 to 1:90, 80:1 to 1:85, 80:1 to 1:75, 80:1 to 1:70, 80:1 to 1:65, 80:1 to 1:60, 80:1 to 1:55, 80:1 to 1:50, 80:1 to 1:45, 80:1 to 1:40, 80:1 to 1:35, 80:1 to 1:30, 80:1 to 1:25, 80:1 to 1:20, 80:1 to 1:15, 80:1 to 1:10, 80:1 to 1:5, 80:1 to 1:4, 80:1 to 1:3, 80:1 to 1:2, 75:1 to 1:75, 75:1 to 1:95, 75:1 to 1:90, 75:1 to 1:85, 75:1 to 1:80, 75:1 to 1:70, 75:1 to 1:65, 75:1 to 1:60, 75:1 to 1:55, 75:1 to 1:50, 75:1 to 1:45, 75:1 to 1:40, 75:1 to 1:35, 75:1 to 1:30, 75:1 to 1:25, 75:1 to 1:20, 75:1 to 1:15, 75:1 to 1:10, 75:1 to 1:5, 75:1 to 1:4, 75:1 to 1:3, 75:1 to 1:2, 70: 1 to 1:70, 70:1 to 1:95, 70:1 to 1:90, 70:1 to 1:85, 70:1 to 1:80, 70:1 to 1:75, 70:1 to 1:65, 70:1 to 1:60, 70:1 to 1:55, 70: 1 to 1:50, 70:1 to 1:45, 70:1 to 1:40, 70:1 to 1:35, 70:1 to 1:30, 70:1 to 1:25, 70:1 to 1:20, 70:1 to 1:15, 70:1 to 1:10, 70: 1 to 1:5, 70:1 to 1:4, 70:1 to 1:3, 70:1 to 1:2, 65:1 to 1:65, 65:1 to 1:95, 65:1 to 1:90, 65:1 to 1:85, 65:1 to 1:80, 65:1 to 1:75, 65:1 to 1:70, 65:1 to 1:60, 65:1 to 1:55, 65:1 to 1:50, 65:1 to 1:45, 65:1 to 1:40, 65:1 to 1:35, 65:1 to 1:30, 65:1 to 1:25, 65:1 to 1:20, 65:1 to 1:15, 65:1 to 1:10, 65:1 to 1:5, 65:1 to 1:4, 65:1 to 1:3, 65:1 to 1:2, 60:1 to 1:60, 60:1 to 1:95, 60:1 to 1:90, 60:1 to 1:85, 60:1 to 1:80, 60:1 to 1:75, 60:1 to 1:70, 60:1 to 1:65, 60:1 to 1:55, 60:1 to 1:50, 60:1 to 1:45, 60:1 to 1:40, 60:1 to 1:35, 60:1 to 1:30, 60:1 to 1:25, 60:1 to 1:20, 60:1 to 1:15, 60:1 to 1:10, 60:1 to 1:5, 60:1 to 1:4, 60:1 to 1:3, 60:1 to 1:2, 55:1 to 1:55, 55:1 to 1:95, 55:1 to 1:90, 55:1 to 1:85, 55:1 to 1:80, 55:1 to 1:75, 55:1 to 1:70, 55:1 to 1:65, 55:1 to 1:60, 55:1 to 1:50, 55:1 to 1:45, 55:1 to 1:40, 55:1 to 1:35, 55:1 to 1:30, 55:1 to 1:25, 55:1 to 1:20, 55:1 to 1:15, 55:1 to 1:10, 55:1 to 1:5, 55:1 to 1:4, 55:1 to 1:3, 55:1 to 1:2, 50:1 to 1:95, 50:1 to 1:90, 50:1 to 1:85, 50: 1 to 1:80, 50:1 to 1:75, 50:1 to 1:70, 50:1 to 1:65, 50:1 to 1:60, 50:1 to 1:55, 50:1 to 1:45, 50:1 to 1:40, 50:1 to 1:35, 50: 1 to 1:30, 50:1 to 1:25, 50:1 to 1:20, 50:1 to 1:15, 50:1 to 1:10, 50:1 to 1:5, 50:1 to 1:4, 50:1 to 1:3, 50:1 to 1:2, 45:1 to 1:45, 45:1 to 1:95, 45:1 to 1:90, 45:1 to 1:85, 45:1 to 1:80, 45:1 to 1:75, 45:1 to 1:70, 45:1 to 1:65, 45:1 to 1:60, 45:1 to 1:55, 45:1 to 1:50, 45:1 to 1:40, 45:1 to 1:35, 45:1 to 1:30, 45:1 to 1:25, 45:1 to 1:20, 45:1 to 1:15, 45:1 to 1:10, 45:1 to 1:5, 45:1 to 1:4, 45:1 to 1:3, 45:1 to 1:2, 40:1 to 1:40, 40:1 to 1:95, 40:1 to 1:90, 40:1 to 1:85, 40:1 to 1:80, 40:1 to 1:75, 40:1 to 1:70, 40:1 to 1:65, 40:1 to 1:60, 40:1 to 1:55, 40:1 to 1:50, 40:1 to 1:45, 40:1 to 1:35, 40:1 to 1:30, 40:1 to 1:25, 40:1 to 1:20, 40:1 to 1:15, 40:1 to 1:10, 40:1 to 1:5, 40:1 to 1:4, 40:1 to 1:3, 40:1 to 1:2, 35:1 to 1:35, 35:1 to 1:95, 35: 1 to 1:90, 35:1 to 1:85, 35:1 to 1:80, 35:1 to 1:75, 35:1 to 1:70, 35:1 to 1:65, 35:1 to 1:60, 35:1 to 1:55, 35:1 to 1:50, 35: 1 to 1:45, 35:1 to 1:40, 35:1 to 1:30, 35:1 to 1:25, 35:1 to 1:20, 35:1 to 1:15, 35:1 to 1:10, 35:1 to 1:5, 35:1 to 1:4, 35:1 to 1:3, 35:1 to 1:2, 30:1 to 1:30, 30:1 to 1:95, 30:1 to 1:90, 30:1 to 1:85, 30:1 to 1:80, 30:1 to 1:75, 30:1 to 1:70, 30:1 to 1:65, 30:1 to 1:60, 30:1 to 1:55, 30:1 to 1:50, 30:1 to 1:45, 30:1 to 1:40, 30:1 to 1:35, 30:1 to 1:25, 30:1 to 1:20, 30:1 to 1:15, 30:1 to 1:10, 30:1 to 1:5, 30:1 to 1:4, 30:1 to 1:3, 30:1 to 1:2, 25:1 to 1:25, 25:1 to 1:95, 25:1 to 1:90, 25:1 to 1:85, 25:1 to 1:80, 25:1 to 1:75, 25:1 to 1:70, 25:1 to 1:65, 25:1 to 1:60, 25:1 to 1:55, 25:1 to 1:50, 25:1 to 1:45, 25:1 to 1:40, 25:1 to 1:35, 25:1 to 1:30, 25:1 to 1:20, 25:1 to 1:15, 25:1 to 1:10, 25:1 to 1:5, 25:1 to 1:4, 25:1 to 1:3, 25:1 to 1:2, 20: 1 to 1:95, 20:1 to 1:90, 20:1 to 1:85, 20:1 to 1:80, 20:1 to 1:75, 20:1 to 1:70, 20:1 to 1:65, 20:1 to 1:60, 20:1 to 1:55, 20: 1 to 1:50, 20:1 to 1:45, 20:1 to 1:40, 20:1 to 1:35, 20:1 to 1:30, 20:1 to 1:25, 20:1 to 1:15, 20:1 to 1:10, 20:1 to 1:5, 20: 1 to 1:4, 20:1 to 1:3, 20:1 to 1:2, 15:1 to 1:15, 15:1 to 1:95, 15:1 to 1:90, 15:1 to 1:85, 15:1 to 1:80, 15:1 to 1:75, 15:1 to 1:70, 15:1 to 1:65, 15:1 to 1:60, 15:1 to 1:55, 15:1 to 1:50, 15:1 to 1:45, 15:1 to 1:40, 15:1 to 1:35, 15:1 to 1:30, 15: 1 to 1:25, 15:1 to 1:20, 15:1 to 1:10, 15:1 to 1:5, 15:1 to 1:4, 15:1 to 1:3, 15:1 to 1:2, 10:1 to 1:10, 10:1 to 1:95, 10:1 to 1:90, 10:1 to 1:85, 10:1 to 1:80, 10:1 to 1:75, 10:1 to 1:70, 10:1 to 1:65, 10:1 to 1:60, 10:1 to 1:55, 10:1 to 1:50, 10:1 to 1:45, 10:1 to 1:40, 10:1 to 1:35, 10:1 to 1:30, 10:1 to 1:25, 10:1 to 1:20, 10:1 to 1:15, 10:1 to 1:5, 10:1 to 1:4, 10:1 to 1: 3, 10:1 to 1:2,5:1 to 1:5,5:1 to 1:95, 5:1 to 1:90,5:1 to 1:85,5:1 to 1:80,5:1 to 1:75, 5:1 to 1:70, 5:1 to 1:65, 5:1 to 1:60, 5:1 to 1:55, 5:1 to 1:50, 5:1 to 1:45, 5:1 to 1:40, 5:1 to 1:35, 5:1 to 1:30,5:1 to 1:25,5:1 to 1:20,5:1 to 1:15,5:1 to 1:10,5: 1 to 1:4,5:1 to 1:3,5:1 to 1:2,4:1 to 1:4, 4:1 to 1:95, 4:1 to 1:90, 4:1 to 1:85, 4:1 to 1:80, 4:1 to 1:75, 4:1 to 1:70, 4:1 to 1:65, 4:1 to 1:60, 4:1 to 1:55, 4:1 to 1:50, 4:1 to 1:45, 4:1 to 1:40, 4:1 to 1:35, 4:1 to 1:30, 4:1 to 1:25, 4:1 to 1:20, 4:1 to 1:15, 4:1 to 1:10, 4:1 to 1:5,4:1 to 1:3, 4:1 to 1:2, 3:1 to 1:3, 3:1 to 1:95, 3:1 to 1:90, 3:1 to 1:85, 3:1 to 1:80, 3:1 to 1: 75, 3:1 to 1:70, 3:1 to 1:65, 3:1 to 1:60, 3:1 to 1:55, 3:1 to 1:50, 3:1 to 1:45, 3:1 to 1:40, 3:1 to 1:35, 3:1 to 1:30, 3:1 to 1:25, 3:1 to 1:20, 3:1 to 1:15, 3:1 to 1:10, 3:1 to 1:5, 3:1 to 1:4, 3:1 to 1:2, 2:1 to 1:2, 2:1 to 1:95, 2:1 to 1:90, 2:1 to 1: 85, 2:1 to 1:80, 2:1 to 1:75, 2:1 to 1:70, 2:1 to 1:65, 2:1 to 1:60, 2:1 to 1:55, 2:1 to 1:50, 2:1 to 1:45, 2:1 to 1:40, 2:1 to

1:35, 2:1 to 1:30, 2:1 to 1:25, 2:1 to 1:20, 2:1 to 1:15, 2:1 to 1:10, 2:1 to 1: 5, 2:1 to 1:4, 2:1 to 1:3.

Where a compound (A) or a compound (B) can be present in tautomeric form, such a compound is understood hereinabove and hereinbelow also to include, where applicable, corresponding tautomeric forms, even when these are not specifically mentioned in each case.

Compounds (A) or compounds (B) having at least one basic centre are capable of forming, for example, acid addition salts, e.g. with strong inorganic acids, such as mineral acids, e.g. perchloric acid, sulfuric acid, nitric acid, nitrous acid, a phosphoric acid or a hydrohalic acid, with strong organic carboxylic acids, such as unsubstituted substituted, e.g. halo-substituted, $C_1$-$C_4$ alkanecarboxylic acids, e.g. acetic acid, saturated or unsaturated dicarboxylic acids, e.g. oxalic, malonic, succinic, maleic, fumaric and phthalic acid, hydroxycarboxylic acids, e.g. ascorbic, lactic, malic, tartaric and citric acid, or benzoic acid, or with organic sulfonic acids, such as unsubstituted or substituted, e.g. halo-substituted, $C_1$-$C_4$alkane- or aryl-sulfonic acids, e.g. methane- or p-toluenesulfonic acid. Compounds (A) or compounds (B) having at least one acid group are capable of forming, for example, salts with bases, e.g. metal salts, such as alkali metal or alkaline earth metal salts, e.g. sodium, potassium or magnesium salts, or salts with ammonia or an organic amine, such as morpholine, piperidine, pyrrolidine, a mono-, di- or tri-lower alkylamine, e.g. ethyl-, diethyl-, triethyl- or dimethyl-propyl-amine, or a mono-, di- or tri-hydroxy-lower alkylamine, e.g. mono-, di-or tri-ethanolamine. In addition, corresponding internal salts may optionally be formed. In the context of the invention, preference is given to agrochemically advantageous salts. In view of the close relationship between the compounds (A) or the compounds (B) in free form and in the form of their salts, hereinabove and herein below any reference to the free compounds (A) or free compounds (B) or to their salts should be understood as including also the corresponding salts or the free compounds (A) or free compounds (B), respectively, where appropriate and expedient. The equivalent also applies to tautomers of compounds (A) or compounds (B) and to their salts.

According to the invention the expression "combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds (A) and (B) is not essential for working the present invention.

In a further aspect there is provided a composition comprising a combination according to this invention. Preferably the fungicidal composition comprises an agriculturally acceptable support, additives, solvents, carriers, surfactants, extenders or fillers.

According to the invention, the term "support" denotes a natural or synthetic, organic or inorganic compound with which the active compound of formula (I) is combined or associated to make it easier to apply, notably to the parts of the plant. This support is thus generally inert and should be agriculturally acceptable. The support may be a solid or a liquid.

Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

Suitable solid carriers are the following:

e.g. ammonium salts and natural rock powders, such as kaolins, clays, talcum, chalk, quartz, attapulgite, montmorillonite or diatomaceous earth and synthetic rock powders such as highly disperse silica, aluminium oxide and silicates, oil waxes, solid fertilizers, water, alcohols, preferably butanol, organic solvents, mineral and vegetable oils and derivatives thereof;
suitable solid carriers for granules are: for example crushed and fractionated natural rocks such as calcite, marble, pumice, sepiolite, dolomite and synthetic granules of inorganic and organic powders and granules of organic materials such as paper, sawdust, coconut shells, corn stalks and tobacco stalks;

By liquefied gaseous diluents or supports are meant such liquids that are gaseous at normal temperature and under normal pressure, for example, aerosol propellants such as halohydrocarbons as well as butane, propane, nitrogen and carbon dioxide.

It is possible to use in the formulations adhesives such as carboxymethylcellulose, natural and synthetic powdered, granular or latex-like polymers such as gum arabic, polyvinyl alcohol, polyvinyl acetate and natural phospholipids, such as cephalins and lecithins and synthetic phospholipids. Further additives can be mineral or vegetable oils and waxes, optionally modified.

Suitable extenders are, for example, water, polar and non-polar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as *N*-alkylpyrrolidones) and lactones, the sulphones and sulphoxides (such

as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulphoxide, and also water.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions. The presence of at least one surfactant is generally essential when the active compound and / or the inert support are water-insoluble and when the vector agent for the application is water. Preferably, surfactant content may be comprised from 5% to 40% by weight of the composition.

Suitable emulsifiers and/or foam-forming agents are: for example non-ionic and anionic emulsifiers, such as polyoxyethylene fatty acid esters, polyoxyethylene fatty alcohol ethers, suitable dispersants are non-ionic and/or ionic substances, for example from the classes comprising alcohol POE and/or POP ethers, acid and/or POP or POE esters, alkyl-aryl and/or POP or POE ethers, fatty and/or POP-POE adducts, POE and/or POP polyol derivatives, POE and/or POP/sorbitan or sugar adducts, alkyl or aryl sulphates, sulphonates and phosphates or the corresponding PO ether adducts. Furthermore, suitable oligomers or polymers, for example based on vinyl monomers, acrylic acid, EO and/or PO alone or in combination with for example polyalcohols or polyamines. Use can also be made of lignin and sulphonic acid derivatives thereof, simple and modified celluloses, aromatic and/or aliphatic sulphonic acids and adducts thereof with formaldehyde. Suitable as dispersants are: for example lignosulphite waste liquors and methylcellulose.

Colouring agents such as inorganic pigments, for example iron oxide, titanium oxide, ferrocyanblue, and organic pigments such as alizarin, azo and metallophthalocyanine dyes, and trace elements such as iron, manganese, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition according to the invention may contain from 0.05 to 99% by weight of active compounds, preferably from 10 to 70% by weight.

The combination or composition according to the invention can be used as such, in form of their formulations or as the use forms prepared therefrom, such as aerosol dispenser, capsule suspension, cold fogging concentrate, hot fogging concentrate, encapsulated granule, fine granule, flowable concentrate for seed treatment, ready-to-use solutions, dustable powder, emulsifiable concentrate, emulsion oil in water, emulsion water in oil, macrogranule, microgranule, oil dispersible powder, oil miscible flowable concentrate, oil miscible liquid, froths, paste, seed coated with a pesticide, suspension concentrate (flowable concentrate), suspensions-emulsions-concentrates, soluble concentrate, suspensions, soluble powder, dustable powder, granule, water soluble granules or tablets, water soluble powder for seed treatment, wettable powder, natural and synthetic materials impregnated with active compound, micro-encapsulation in polymeric materials and in jackets for seed, as well as ULV- cold and hot fogging formulations, gas (under pressure), gas generating product, plant rodlet, powder for dry seed treatment, solution for seed treatment, ultra low volume (ULV) liquid, ultra low volume (ULV) suspension, water dispersible granules or tablets, water dispersible powder for slurry treatment.

These formulations are prepared in a known manner by mixing the active compounds or active compound combinations with customary additives, such as, for example, customary extenders and also solvents or diluents, emulsifiers, dispersants, and/or bonding or fixing agent, wetting agents, water repellents, if appropiate siccatives and UV stabilisers, colorants, pigments, defoamers, preservatives, secondary thickeners, adhesives, gibberellins and water as well further processing auxiliaries.

The active compound combinations according to the invention can be used in its commercially available formulations and in the use forms, prepared from these formulations, as a mixture with other active compounds, such as insecticides, attractants, sterilizing agents, bactericides, acaricides, nematicides, fungicides, growth-regulating substances, herbicides, safeners, fertilizers or semiochemicals.

The combination according to the invention for combating phytopathogenic fungi in crop protection comprises a effective, but not phytotoxic amount of the active compounds according to the invention. Effective, but not phytotoxic amount points towards an amount of the combination according to the invention which is sufficient on one hand to control

satisfactorily or completely eliminate the fungal disease of the plant and which on the other does not lead to any noteworthy symptoms of phytotoxicity. The effective dose can be varied in general in a larger range. The dose is dependent on several factors eg the fungi to be combatted, the plant, the climatic conditions, and on the active compounds of the combination according to the invention.

These compositions include not only compositions which are ready to be applied to the plant or seed to be treated by means of a suitable device, such as a spraying or dusting device, but also concentrated commercial compositions which must be diluted before application to the crop.

The active compounds within the composition according to the invention have potent microbicide activity and can be employed for controlling undesired micro-organisms, such as fungi or bacteria, in crop protection or in the protection of materials.

Within the composition according to the invention, fungicide compounds can be employed in crop protection for example for controlling Plasmodiophoromycetes, Oomycetes, Chytridiomycetes, Zygomycetes, Ascomycetes, Basidiomycetes and Deuteromycetes.

Within the composition according to the invention, bactericide compounds can be employed in crop protection for example for controlling Pseudomonadaceae, Rhizobiaceae, Enterobacteriaceae, Corynebacteriaceae and Streptomycetaceae.

The fungicide combinations and/or composition according to the invention can be used to curatively or preventively control the phytopathogenic fungi of plants or crops. Thus, according to a further aspect of the invention, there is provided a method for curatively or preventively controlling the phytopathogenic fungi of plants or crops comprising the use of a fungicide composition according to the invention by application to the seed, the plant or to the fruit of the plant or to the soil in which the plant is growing or in which it is desired to grow.

The treatment of plants and plant parts with the active compound combination according to the invention is carried out directly or by action on their environment, habitat or storage area by means of the normal treatment methods, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting , in the case of propagation material, in particular in the case of seeds, furthermore by dry treatments, slurry treatments, liquid treatments, by one- or multi-layer coating.. It is furthermore possible to apply the active compounds by the ultra-low volume method, or to inject the active compound preparation or the active compound itself into the soil.

The method of treatment according to the invention may also be useful to treat propagation material such as tubers or rhizomes, but also seeds, seedlings or seedlings pricking out and plants or plants pricking out. This method of treatment can also be useful to treat roots. The method of treatment according to the invention can also be useful to treat the over-ground parts of the plant such as trunks, stems or stalks, leaves, flowers and fruit of the concerned plant.

A further aspect of the present invention is a method of protecting natural substances of vegetable or animal origin or their processed forms, which have been taken from the natural life cycle, which comprises applying to said natural substances of vegetable or animal origin or their processed forms a combination of compounds (A) and (B) in a synergistically effective amount.

A preferred embodiment is a method of protecting natural substances of vegetable origin or their processed forms, which have been taken from the natural life cycle, which comprises applying to said natural substances of vegetable origin or their processed forms a combination of compounds (A) and (B) in a synergistically effective amount.

A further preferred embodiment is a method of protecting fruit, preferably pomes, stone fruits, soft fruits and citrus fruits, or their processed forms, which have been taken from the natural life cycle, which comprises applying to said natural substances of vegetable origin or their processed forms a combination of compounds (A) and (B) in a synergistically effective amount.

The invention comprises a procedure in which the seed is treated at the same time with a compound of Group (A) and a compound selected from group (B). It further comprises a method in which the seed is treated with compound of Group (A) and a compound selected from group (B) separately.

The invention also comprises a seed, which has been treated with a compound of Group (A) and a compound selected from group (B) at the same time. The invention also comprises a seed, which has been treated with a compound of Group (A) and a compound selected from group (B) separately. For the latter seed, the active ingredients can be applied in separate layers. These layers can optionally be separated by an additional layer that may or may not contain an active ingredient.

The combinations and/or compositions of the invention are particularly suitable for the treatment of seeds. A large part of the damage caused by pests and phytopathogenic fungi and microorganisms on cultigens occurs by infestation of the seed during storage and after sowing the seed in the ground as well as during and after germination of the plants. This phase is especially critical since the roots and shoots of the growing plant are particularly sensitive and even a small amount of damage can lead to withering of the whole plant. There is therefore considerable interest in protecting the seed and the germinating plant by the use of suitable agents.

The control of pests and phytopathogenic fungi and microorganisms by treatment of the seeds of plants has been known for a considerable time and is the object of continuous improvement. However, there are a number of problems in the treatment of seed that cannot always be satisfactorily solved. Therefore it is worthwhile to develop methods for the protection of seeds and germinating plants which makes the additional application of plant protection agents after seeding or after germination of the plants superfluous. It is further worthwhile to optimize the amount of the applied active material such that the seed and the germinating plants are protected against infestation by pests and phytopathogenic fungi and microorganisms as best as possible without the plants themselves being damaged by the active compound applied. In particular, methods for the treatment seed should also take into account the intrinsic fungicidal and insecticidal properties of transgenic plants in order to achieve optimal protection of the seed and germinating plants with a minimal expenditure of plant protection agents.

The present invention relates therefore especially to a method for the protection of seed and germinating plants from infestation with pests and phytopathogenic fungi and microorganisms in that the seed is treated with the combination/ composition of the invention. In addition the invention relates also to the use of the combination/composition of the invention for the treatment seed for protection of the seed and the germinating plants from pests and phytopathogenic fungi and microorganisms. Furthermore the invention relates to seed which was treated with a combination/composition of the invention for protection from pests.

The control of phytopathogenic fungi which damage plants post-emergence is carried out primarily by treating the soil and the above-ground parts of plants with crop protection agents. Owing to the concerns regarding a possible impact of crop protection agents on the environment and the health of humans and animals, there are efforts to reduce the amount of active compounds applied.

One of the advantages of the invention is because of the special systemic properties of the combination/ composition of the invention treatment with these combination/ composition protects not only the seed itself from pests but also the plants emerging after sprouting. In this way the direct treatment of the culture at the time of sowing or shortly thereafter can be omitted.

A further advantage is the synergistic increase in fungicidal activity of the combination/composition of the invention in comparison to the respective individual active compounds, which extends beyond the expected activity of both individually applied active compounds. In this way an optimization of the amount of active compound applied is made possible.

It is also be regarded as advantageous that the mixtures of the invention can also be used in particular with transgenic seeds whereby the plants emerging from this seed are capable of the expression of a protein directed against pests. By treatment of such seed with the agents of the invention certain pests can already be controlled by expression of the, for example, insecticidal protein, and it is additionally surprising that a synergistic activity supplementation occurs with the agents of the invention, which improves still further the effectiveness of the protection from pest infestation.

The agents of the invention are suitable for the protection of seed of plant varieties of all types as already described which are used in agriculture, in greenhouses, in forestry, in horticulture or in vineyards. In particular, this concerns seed of cereals (like wheat, barley, rye, triticale, millet, oats, rice), maize, cotton, soya bean, potato, sunflower, beans, coffee, beet (e.g. sugar beet, mangold and feed beet), peanut, canola, rapeseed, poppy, olive, coconut, cacao, sugar cane or tobacco. The combination/ compositions of the invention are also suitable for the treatment of the seed of fruit plants and vegetables (like tomato, cucumber, onion and lettuce), lawn, turf and ornamental plants as previously described. Particular importance is attached to the treatment of the seed of wheat, barley, rye, triticale, oats, maize, rice, soya bean, cotton, canola, rapeseed.

As already described, the treatment of transgenic seed with a combination/ composition of the invention is of particular importance. This concerns the seeds of plants which generally contain at least one heterologous gene that controls the expression of a polypeptide with special insecticidal properties. The heterologous gene in transgenic seed can originate from microorganisms such as *Bacillus, Rhizobium, Pseudomonas, Serratia, Trichoderma, Clavibacter Glomus* or *Gliocladium.* The present invention is particularly suitable for the treatment of transgenic seed that contains at least one heterologous gene that originates from *Bacillus sp.* and whose gene product exhibits activity against the European corn borer and/or western corn rootworm. Particularly preferred is a heterologous gene that originates from *Bacillus thuringiensis.*

Within the context of the present invention the combination/ composition of the invention is applied to the seed alone or in a suitable formulation. Preferably the seed is handled in a state in which it is so stable, that no damage occurs during treatment. In general treatment of the seed can be carried out at any time between harvest and sowing. Normally seed is used that was separated from the plant and has been freed of spadix, husks, stalks, pods, wool or fruit flesh. Use of seed that was harvested, purified, and dried to moisture content of below 15 % w/w. Alternatively, seed treated with water after drying and then dried again can also be used.

In general care must be taken during the treatment of the seed that the amount of the combination/composition of the invention and/or further additive applied to the seed is so chosen that the germination of the seed is not impaired and the emerging plant is not damaged. This is to be noted above all with active compounds which can show phytotoxic

effects when applied in certain amounts.

The combination/ compositions of the invention can be applied directly, that is without containing additional components and without being diluted. It is normally preferred to apply the combination/composition to the seed in the form of a suitable formulation. Suitable formulations and methods for seed treatment are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

The active compound combinations and compositions which can be used according to the invention can be converted into customary seed dressing formulations, such as solutions, emulsions, suspensions, powders, foams, slurries or other coating materials for seed, and also ULV formulations.

These formulations are prepared in a known manner by mixing the active compounds or active compound combinations with customary additives, such as, for example, customary extenders and also solvents or diluents, colorants, wetting agents, dispersants, emulsifiers, defoamers, preservatives, secondary thickeners, adhesives, gibberellins and optionally water as well.

Suitable colorants that may be present in the seed dressing formulations of the invention include all colorants customary for such purposes. Use may be made both of pigments, of sparing solubility in water, and of dyes, which are soluble in water. Examples that may be mentioned include the colorants known under the designations rhodamine B, C.I. Pigment Red 112, and C.I. Solvent Red 1.

Suitable wetting agents that may be present in the seed dressing formulations of the invention include all substances which promote wetting and are customary in the formulation of active agrochemical substances. With preference it is possible to use alkylnaphthalene-sulphonates, such as diisopropyl- or diisobutylnaphthalene-sulphonates.

Suitable dispersants and/or emulsifiers that may be present in the seed dressing formulations of the invention include all nonionic, anionic, and cationic dispersants which are customary in the formulation of active agrochemical substances. With preference, it is possible to use nonionic or anionic dispersants or mixtures of nonionic or anionic dispersants. Particularly suitable nonionic dispersants are ethylene oxide-propylene oxide block polymers, alkylphenol polyglycol ethers, and tristyrylphenol polyglycol ethers, and their phosphated or sulphated derivatives. Particularly suitable anionic dispersants are lignosulphonates, polyacrylic salts, and arylsulphonate-formaldehyde condensates.

Suitable defoamers that may be present in the seed dressing formulations of the invention include all foam-inhibiting substances which are customary in the formulation of active agrochemical substances. With preference it is possible to use silicone defoamers and magnesium stearate.

Suitable preservatives that may be present in the seed dressing formulations of the invention include all substances which can be used for such purposes in agrochemical compositions. By way of example, mention may be made of dichlorophen and benzyl alcohol hemiformal.

Suitable secondary thickeners that may be present in the seed dressing formulations of the invention include all substances which can be used for such purposes in agrochemical compositions. Preferred suitability is possessed by cellulose derivatives, acrylic acid derivatives, xanthan, modified clays, and highly disperse silica.

Suitable adhesives that may be present in the seed dressing formulations of the invention include all customary binders which can be used in seed dressing. With preference, mention may be made of polyvinylpyrrolidone, polyvinyl acetate, polyvinyl alcohol and tylose.

Suitable gibberellins that may be present in the seed dressing formulations of the invention include preferably gibberelin A1, A3 (=gibberellinic acid), A4, and A7, particular preferably gibberelin A3 (=gibberellinic acid). The gibberellins of the formula (II) are known (cf. R. Wegler "Chemie der Pflanzenschutz- and Schädlingsbekämpfungsmittel", Volume 2, Springer Verlag, Berlin-Heidelberg-New York, 1970, pages 401-412).

Suitable mixing equipment for treating seed with the seed dressing formulations to be used according to the invention or the preparations prepared from them by adding water includes all mixing equipment which can commonly be used for dressing. The specific procedure adopted when dressing comprises introducing the seed into a mixer, adding the particular desired amount of seed dressing formulation, either as it is or following dilution with water beforehand, and carrying out mixing until the formulation is uniformly distributed on the seed. Optionally, a drying operation follows.

According to the invention all plants and plant parts can be treated. By plants is meant all plants and plant populations such as desirable and undesirable wild plants or cultigens (including naturally occurring cultigens). Cultigens can be plants obtained by conventional propagation and optimisation methods or by bioengineering and genetic engineering methods or by combinations of these methods, including transgenic plants and including plant varieties protectable or not protectable by plant varieties protective rights. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

Among the plants that can be protected by the method according to the invention, mention may be made of cotton ; flax ; vine ; fruit or vegetable crops such as *Rosaceae sp.* (for instance pip fruit such as apples and pears, but also stone fruit such as apricots, almonds and peaches), *Ribesioidae sp., Juglandaceae sp., Betulaceae sp., Anacar-*

*diaceae sp., Fagaceae sp., Moraceae sp., Oleaceae sp., Actinidaceae sp., Lauraceae sp., Musaceae sp.* (for instance banana trees and plantins), *Rubiaceae sp., Theaceae sp., Sterculiceae sp., Rutaceae sp.* (for instance lemons, oranges and grapefruit) ; *Solanaceae sp.* (for instance tomatoes), *Liliaceae sp., Asteraceae sp.* (for instance lettuces), *Umbelliferae sp., Cruciferae sp., Chenopodiaceae sp., Cucurbitaceae sp., Papilionaceae sp.* (for instance peas), *Rosaceae sp.* (for instance strawberries) ; major crops such as *Graminae sp.* (for instance maize, lawn or cereals such as wheat, rye, rice, barley and triticale), *Asteraceae sp.* (for instance sunflower), *Cruciferae sp.* (for instance colza), *Fabacae sp.* (for instance peanuts), *Papilionaceae sp.* (for instance soybean), *Solanaceae sp.* (for instance potatoes), *Chenopodiaceae sp.* (for instance beetroots) ; horticultural and forest crops ; as well as genetically modified homologues of these crops.

The method of treatment according to the invention can be used in the treatment of genetically modified organisms, e.g. plants or seeds. Genetically modified plants are plants of which a heterologous gene encoding a protein of interest has been stably integrated into genome. The expression "heterologous gene encoding a protein of interest" essentially means genes which give the transformed plant new agronomic properties, or genes for improving the agronomic quality of the modified plant.

As already mentioned above, it is possible to treat all plants and their parts according to the invention. In a preferred embodiment, wild plant species and plant cultivars, or those obtained by conventional biological breeding methods, such as crossing or protoplast fusion, and parts thereof, are treated. In a further preferred embodiment, transgenic plants and plant cultivars obtained by genetic engineering methods, if appropriate in combination with conventional methods (Genetically Modified Organisms), and parts thereof are treated. The terms "parts", "parts of plants" and "plant parts" have been explained above.

Particularly preferably, plants of the plant cultivars which are in each case commercially available or in use are treated according to the invention. Plant cultivars are to be understood as meaning plants having novel properties ("traits") which have been obtained by conventional breeding, by mutagenesis or by recombinant DNA techniques. These can be cultivars, bio- or genotypes.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

At certain application rates, the active compound combinations according to the invention may also have a strengthening effect in plants. Accordingly, they are also suitable for mobilizing the defense system of the plant against attack by unwanted microorganisms. This may, if appropriate, be one of the reasons of the enhanced activity of the combinations according to the invention, for example against fungi. Plant-strengthening (resistance-inducing) substances are to be understood as meaning, in the present context, those substances or combinations of substances which are capable of stimulating the defense system of plants in such a way that, when subsequently inoculated with unwanted microorganisms, the treated plants display a substantial degree of resistance to these microorganisms. In the present case, unwanted microorganisms are to be understood as meaning phytopathogenic fungi, bacteria and viruses. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active compounds.

The transgenic plants or plant cultivars (obtained by genetic engineering) which are preferably to be treated according to the invention include all plants which, by virtue of the genetic modification, received genetic material which imparted particularly advantageous, useful traits to these plants. Examples of such traits are better plant growth, increased tolerance to high or low temperatures, increased tolerance to drought or to water or soil salt content, increased flowering performance, easier harvesting, accelerated maturation, higher harvest yields, higher quality and/or a higher nutritional value of the harvested products, better storage stability and/or processability of the harvested products. Further and particularly emphasized examples of such traits are a better defense of the plants against animal and microbial pests, such as against insects, mites, phytopathogenic fungi, bacteria and/or viruses, and also increased tolerance of the plants to certain herbicidally active compounds. Examples of transgenic plants which may be mentioned are the important crop plants, such as cereals (wheat, rice), maize, soya beans, potatoes, cotton, tobacco, oilseed rape, canola, sugar beet, tomatoes, peas and other vegetable varieties, and also fruit plants (with the fruits apples, pears, citrus fruits and grapes), and particular emphasis is given to maize, soya beans, potatoes, cotton, tobacco, canola and oilseed rape. Traits that are emphasized are in particular increased defence of the plants against insects, arachnids, nematodes and slugs and snails by virtue of toxins formed in the plants, in particular those formed in the plants by the genetic material from *Bacillus*

*thuringiensis* (for example by the genes CryIA(a), CryIA(b), CryIA(c), CryIIA, CryIIIA, CryIIIB2, Cry9c, Cry2Ab, Cry3Bb and CryIF and also combinations thereof) (referred to hereinbelow as "Bt plants"). Traits that are also particularly emphasized are the increased defence of the plants against fungi, bacteria and viruses by systemic acquired resistance (SAR), systemin, phytoalexins, elicitors and resistance genes and correspondingly expressed proteins and toxins. Traits that are furthermore particularly emphasized are the increased tolerance of the plants to certain herbicidally active compounds, for example imidazolinones, sulphonylureas, glyphosate or phosphinotricin (for example the "PAT" gene). The genes which impart the desired traits in question can also be present in combination with one another in the transgenic plants. Examples of "Bt plants" which may be mentioned are maize varieties, cotton varieties, soya bean varieties and potato varieties which are sold under the trade names YIELD GARD® (for example maize, cotton, soya beans), KnockOut® (for example maize), StarLink® (for example maize), Bollgard® (cotton), Nucoton® (cotton) and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape and canola), IMI® (tolerance to imidazolinones) and STS® (tolerance to sulphonylureas, for example maize). Herbicide-resistant plants (plants bred in a conventional manner for herbicide tolerance) which may be mentioned include the varieties sold under the name Clearfield® (for example maize). Of course, these statements also apply to plant cultivars having these genetic traits or genetic traits still to be developed, which plant cultivars will be developed and/or marketed in the future.

A further aspect of the instant invention is a method of protecting natural substances of vegetable or animal origin or their processed forms, which have been taken from the natural life cycle, which comprises applying to said natural substances of vegetable or animal origin or their processed forms a combination of compounds (A) and (B) in a synergistically effective amount.

A preferred embodiment is a method of protecting natural substances of vegetable origin or their processed forms, which have been taken from the natural life cycle, which comprises applying to said natural substances of vegetable origin or their processed forms a combination of compounds (A) and (B) in a synergistically effective amount.

A further preferred embodiment is a method of protecting fruit, preferably pomes, stone fruits, soft fruits and citrus fruits, or their processed forms, which have been taken from the natural life cycle, which comprises applying to said natural substances of vegetable origin or their processed forms a combination of compounds (A) and (B) in a synergistically effective amount.

The combinations of the present invention may also be used in the field of protecting technical material against attack of fungi. According to the instant invention, the term "technical material" includes paper; carpets; constructions; cooling and heating systems; wall-boards; ventilation and air conditioning systems and the like. The combinations according the present invention can prevent disadvantageous effects such as decay, discoloration or mold. Preferably "storage goods" is understood to denote wall-boards.

The method of treatment according to the invention can also be used in the field of protecting storage goods against attack of fungi. According to the instant invention, the term "storage goods" is understood to denote natural substances of vegetable or animal origin and their processed forms, which have been taken from the natural life cycle and for which long-term protection is desired. Storage goods of vegetable origin, such as plants or parts thereof, for example stalks, leafs, tubers, seeds, fruits or grains, can be protected in the freshly harvested state or in processed form, such as pre-dried, moistened, comminuted, ground, pressed or roasted. Also falling under the definition of storage goods is timber, whether in the form of crude timber, such as construction timber, electricity pylons and barriers, or in the form of finished articles, such as furniture or objects made from wood. Storage goods of animal origin are hides, leather, furs, hairs and the like. The combinations according the present invention can prevent disadvantageous effects such as decay, discoloration or mold. Preferably "storage goods" is understood to denote natural substances of vegetable origin and their processed forms, more preferably fruits and their processed forms, such as pomes, stone fruits, soft fruits and citrus fruits and their processed forms.

In another preferred embodiment of the invention "storage goods" is understood to denote wood. The fungicide combination or composition according to the invention may also be used against fungal diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting one or more compounds according to the invention, or a composition according to the invention; this includes for example direct application, spraying, dipping, injection or any other suitable means.

Among the diseases of plants or crops that can be controlled by the method according to the invention, mention may be made of:

Powdery Mildew Diseases such as

Blumeria diseases caused for example by Blumeria graminis

Podosphaera diseases caused for example by Podosphaera leucotricha

Sphaerotheca diseases caused for example by Sphaerotheca fuliginea

Uncinula diseases caused for example by Uncinula necator

Rust Diseases such as

Gymnosporangium diseases caused for example by Gymnosporangium sabinae

Hemileia diseases caused for example by Hemileia vastatrix

Phakopsora diseases caused for example by Phakopsora pachyrhizi and Phakopsora meibomiae

Puccinia diseases caused for example by Puccinia recondite, and Puccinia triticina;

Uromyces diseases caused for example by Uromyces appendiculatus

Oomycete Diseases such as

Bremia diseases caused for example by Bremia lactucae

Peronospora diseases caused for example by Peronospora pisi and Peronospora brassicae

Phytophthora diseases caused for example by Phytophthora infestans

Plasmopara diseases caused for example by Plasmopara viticola

Pseudoperonospora diseases caused for example by Pseudoperonospora humuli and Pseudoperonospora cubensis

Pythium diseases caused for example by Pythium ultimum

Leafspot, Leaf blotch and Leaf Blight Diseases such as

Alternaria diseases caused for example by Alternaria solani

Cercospora diseases caused for example by Cercospora beticola

Cladiosporium diseases caused for example by Cladiosporium cucumerinum

Cochliobolus diseases caused for example by Cochliobolus sativus

(Conidiaform: Drechslera, Syn: Helminthosporium);

Colletotrichum diseases caused for example by Colletotrichum lindemuthianum

Cycloconium diseases caused for example by Cycloconium oleaginum

Diaporthe diseases caused for example by Diaporthe citri

Elsinoe diseases caused for example by Elsinoe fawcettii

Gloeosporium diseases caused for example by Gloeosporium laeticolor

Glomerella diseases caused for example by Glomerella cingulata

Guignardia diseases caused for example by Guignardia bidwellii

Leptosphaeria diseases caused for example by Leptosphaeria maculans

Magnaporthe diseases caused for example by Magnaporthe grisea

Mycosphaerella diseases caused for example by Mycosphaerella graminicola and Mycosphaerella fijiensis

Phaeosphaeria diseases caused for example by Phaeosphaeria nodorum

Pyrenophora diseases caused for example by Pyrenophora teres

Ramularia diseases caused for example by Ramularia collo-cygni

Rhynchosporium diseases caused for example by Rhynchosporium secalis

Septoria diseases caused for example by Septoria apii;

Typhula diseases caused for example by Thyphula incamata

Venturia diseases caused for example by Venturia inaequalis

Root- and Stem Diseases such as

Corticium diseases caused for example by Corticium graminearum

Fusarium diseases caused for example by Fusarium oxysporum

Gaeumannomyces diseases caused for example by Gaeumannomyces graminis

Rhizoctonia diseases caused for example by Rhizoctonia solani

Oculimacula (Tapesia) diseases caused for example by Oculimacula Tapesia acuformis

Thielaviopsis diseases caused for example by Thielaviopsis basicola

Ear and Panicle Diseases including Maize cob such as

Alternaria diseases caused for example by Alternaria spp.

Aspergillus diseases caused for example by Aspergillus flavus

Cladosporium diseases caused for example by Cladiosporium cladosporioides

Claviceps diseases caused for example by Claviceps purpurea

Fusarium diseases caused for example by Fusarium culmorum

Gibberella diseases caused for example by Gibberella zeae

Monographella diseases caused for example by Monographella nivalis

Smut- and Bunt Diseases such as

Sphacelotheca diseases caused for example by Sphacelotheca reiliana

Tilletia diseases caused for example by Tilletia caries

Urocystis diseases Urocystis occulta

Ustilago diseases caused for example by Ustilago nuda;

Fruit Rot and Mould Diseases such as

Aspergillus diseases caused for example by Aspergillus flavus

Botrytis diseases caused for example by Botrytis cinerea

Penicillium diseases caused for example by Penicillium expansum and Penicillium purpurogenum

Sclerotinia diseases caused for example by Sclerotinia sclerotiorum;

Verticillium diseases caused for example by Verticillium alboatrum

Seed- and Soilborne Decay, Mould, Wilt, Rot and Damping-off diseases

Alternaria diseases caused for example by Alternaria brassicicola

Aphanomyces diseases caused for example by Aphanomyces euteiches

Ascochyta diseases caused for example by Ascochyta lentis

Aspergillus diseases caused for example by Aspergillus flavus

Cladosporium diseases caused for example by Cladosporium herbarum

Cochliobolus diseases caused for example by Cochliobolus sativus

(Conidiaform: Drechslera, Bipolaris Syn: Helminthosporium);

Colletotrichum diseases caused for example by Colletotrichum coccodes;

Fusarium diseases caused for example by Fusarium culmorum;

Gibberella diseases caused for example by Gibberella zeae;

Macrophomina diseases caused for example by Macrophomina phaseolina

Monographella diseases caused for example by Monographella nivalis;

Penicillium diseases caused for example by Penicillium expansum

Phoma diseases caused for example by Phoma lingam

Phomopsis diseases caused for example by Phomopsis sojae;

Phytophthora diseases caused for example by Phytophthora cactorum;

Pyrenophora diseases caused for example by Pyrenophora graminea

Pyricularia diseases caused for example by Pyricularia oryzae;

Pythium diseases caused for example by Pythium ultimum;

Rhizoctonia diseases caused for example by Rhizoctonia solani;

Rhizopus diseases caused for example by Rhizopus oryzae

Sclerotium diseases caused for example by Sclerotium rolfsii;

Septoria diseases caused for example by Septoria nodorum;

Typhula diseases caused for example by Typhula incarnata;

Verticillium diseases caused for example by Verticillium dahliae

Canker, Broom and Dieback Diseases such as

Nectria diseases caused for example by Nectria galligena

Blight Diseases such as

Monilinia diseases caused for example by Monilinia laxa

Leaf Blister or Leaf Curl Diseases including deformation of blooms and fruits such as

Taphrina diseases caused for example by Taphrina deformans

Decline Diseases of Wooden Plants such as

Esca disease caused for example by Phaeomoniella clamydospora and Phaeoacremonium aleophilum and Fomitiporia mediterranea

Diseases of Flowers and Seeds such as

Botrytis diseases caused for example by Botrytis cinerea

Diseases of Tubers such as

Rhizoctonia diseases caused for example by Rhizoctonia solani

Helminthosporium diseases caused for example by Helminthosporium solani

Diseases caused by Bacterial Organisms such as

Xanthomanas species for example Xanthomonas campestris pv. Oryzae

Pseudomonas species for example Pseudomonas syringae pv. Lachrymans

Erwinia species for example Erwinia amylovora.

The compounds releated to this invention are preferably used to control the following soybean diseases:

Fungal Diseases of the Foliage, Upper Stems, Pods and Seeds for example

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Pod and Stem Blight (Phomopsis sojae), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi, Phakopsora meibomiae), Scab (Sphaceloma glycines), Stemphylium Leaf Blight (Stemphylium botryosum), Target Spot (Corynespora cassiicola)

Fungal Disease of the Roots and Lower Stems for example

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

The method of treatment according to the invention also provides the use of compounds (A) and (B) in a simultaneous, separate or sequential manner.

The dose of active compound / application rate usually applied in the method of treatment according to the invention is generally and advantageously

- for foliar treatments: from 0.1 to 10,000 g/ha, preferably from 10 to 1,000 g/ha, more preferably from 50 to 300g/ha; in case of drench or drip application, the dose can even be reduced, especially while using inert substrates like rockwool or perlite;

- for seed treatment: from 2 to 200 g per 100 kilogram of seed, preferably from 3 to 150 g per 100 kilogram of seed;

- for soil treatment: from 0.1 to 10,000 g/ha, preferably from 1 to 5,000 g/ha.

The doses herein indicated are given as illustrative examples of the method according to the invention. A person skilled in the art will know how to adapt the application doses, notably according to the nature of the plant or crop to be treated.

The combination according to the invention can be used in order to protect plants within a certain time range after the treatment against pests and phytopathogenic fungi. The time range, in which protection is procured, spans in general one to 28 days, preferably one to 14 days after the treatment of the plants with the combinations or up to 200 days after the treatment of plant propagation material.

The compounds or mixtures according to the invention may also be used for the preparation of composition useful to curatively or preventively treat human or animal fungal diseases such as, for example, mycoses, dermatoses, trichophyton diseases and candidiases or diseases caused by *Aspergillus spp.,* for example *Aspergillus fumigatus.*

Furthermore compounds or mixtures according to the invention may also be used to reduce the contents of mycotoxins in plants and the harvested plant material and therefore in foods and animal feed stuff made therefrom.

Especially but not exclusively the following mycotoxins can be specified:

Deoxynivalenole (DON), Nivalenole, 15-Ac-DON, 3-Ac-DON, T2- und HT2- Toxins, Fumonisines, Zearalenone Moniliformine, Fusarine, Diaceotoxyscirpenole (DAS), Beauvericine, Enniatine, Fusaroproliferine, Fusarenole, Ochratoxines, Patuline, Ergotalcaloides und Aflatoxines, which are caused for example by the following fungal diseases: Fusarium spec., like Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides and others but also by Aspergillus spec., Penicillium spec., Claviceps purpurea, Stachybotrys spec. and others.

According to another aspect of the present invention, in the combination or composition according to the invention, the compound ratio A/B may be advantageously chosen so as to produce a synergistic effect. The term synergistic effect is understood to mean in particular that defined by Colby in an article entitled "Calculation of the synergistic and antagonistic responses of herbicide combinations" Weeds, (1967), 15, pages 20-22.

The latter article mentions the formula:

$$E = X + Y - \frac{XY}{100}$$

wherein E represents the expected percentage of inhibition of the pest for the combination of the two compounds at defined doses (for example equal to x and y respectively), X is the percentage of inhibition observed for the pest by

compound (A) at a defined dose (equal to x), Y is the percentage of inhibition observed for the pest by compound (B) at a defined dose (equal to y). When the percentage of inhibition observed for the combination is greater than E, there is a synergistic effect.

The term "synergistic effect" also means the effect defined by application of the Tammes method, "Isoboles, a graphic representation of synergism in pesticides", Netherlands Journal of Plant Pathology, 70(1964), pages 73-80.

The invention is illustrated by the examples which follow. However, the invention is not limited to the examples.

## Example A

**Blumeria test (wheat) / curative**

| | |
|---|---|
| Solvent: | 50 parts by weight of n,n-dimethylacetamid |
| Emulsifier: | 1 part by weight of alkylaryl polyglycol ether |

To produce a suitable preparation of active compound, 1 part by weight of active compound or the compound combination is mixed with the stated amounts of solvent and emulsifier, and the concentrate is diluted with water to the desired concentration.

To test for curative activity, young plants are dusted with spores of *Blumeria graminis f.sp. tritici.* 48 hours after the inoculation, the plants are sprayed with the preparation of active compound at the stated rate of application.

The plants are placed in a greenhouse at a temperature of approximately 20°C and a relative atmospheric humidity of approximately 80% to promote the development of mildew pustules.

The test is evaluated 7 days after the inoculation. 0% means an efficacy which corresponds to that of the control, while an efficacy of 100% means that no disease is observed.

## Example B

**Pyrenophora teres test (barley) / preventive**

| | |
|---|---|
| Solvent: | 50 parts by weight of N,N-dimethylacetamide |
| Emulsifier: | 1 part by weight of alkylaryl polyglycol ether |

To produce a suitable preparation of active compound, 1 part by weight of active compound or the compound combination is mixed with the stated amounts of solvent and emulsifier, and the concentrate is diluted with water to the desired concentration.

To test for protective activity, young plants are sprayed with a preparation of active compound at the stated rate of application. After the spray coating has dried on, the plants are sprayed with a conidia suspension of *Pyrenophora teres.* The plants remain for 48 hours in an incubation cabinet at 20°C and a relative atmospheric humidity of 100%.

The plants are placed in a greenhouse at a temperature of approximately 20°C and a relative atmospheric humidity of approximately 80%.

The test is evaluated 10 days after the inoculation. 0% means an efficacy which corresponds to that of the control, while an efficacy of 100% means that no disease is observed.

## Example C

**Leptosphaeria nodorum test (wheat) / preventive**

| | |
|---|---|
| Solvent: | 50 parts by weight of n,n-dimethylacetamid |
| Emulsifier: | 1 part by weight of alkylaryl polyglycol ether |

To produce a suitable preparation of active compound, 1 part by weight of active compound or the compound

combination is mixed with the stated amounts of solvent and emulsifier, and the concentrate is diluted with water to the desired concentration.

To test for protective activity, young plants are sprayed with a preparation of active compound or active compound combination at the stated rate of application. After the spray coating has dried on, the plants are sprayed with a spore suspension of *Leptosphaeria nodorum.* The plants remain for 48 hours in an incubation cabinet at 20°C and a relative atmospheric humidity of 100%.

The plants are placed in a greenhouse at a temperature of approximately 15°C and a relative atmospheric humidity of approximately 80%.

The test is evaluated 10 days after the inoculation. 0% means an efficacy which corresponds to that of the control, while an efficacy of 100% means that no disease is observed.

## Example D

### Botrytis test (beans) / protective

| | |
|---|---|
| Solvent: | 24,5 parts by weight of acetone |
| | 24,5 parts by weight of dimethylacetamide |
| Emulsifier: | 1 part by weight of alkylaryl polyglycol ether |

To produce a suitable preparation of active compound, 1 part by weight of active compound is mixed with the stated amounts of solvent and emulsifier, and the concentrate is diluted with water to the desired concentration.

To test for protective activity, young plants are sprayed with the preparation of active compound. After the spray coating has dried on, 2 small pieces of agar covered with growth of *Botrytis cinerea* are placed on each leaf. The inoculated plants are placed in a darkened chamber at 20oC and a relative atmospheric humidity of 100%.

2 days after the inoculation, the size of the lesions on the leaves is evaluated. 0% means an efficacy which corresponds to that of the control, while an efficacy of 100% means that no disease is observed.

## Example E

### Sphaerotheca test (cucumbers) / protective

| | |
|---|---|
| Solvent: | 24,5 parts by weight of acetone |
| | 24,5 parts by weight of dimethylacetamide |
| Emulsifier: | 1 part by weight of alkylaryl polyglycol ether |

To produce a suitable preparation of active compound, 1 part by weight of active compound is mixed with the stated amounts of solvent and emulsifier, and the concentrate is diluted with water to the desired concentration.

To test for protect activity, young plants are sprayed with the preparation of active compound at the stated rate of application. After the spray coating has dried on, the plants are inoculated with an aqueous spore suspension of *Sphaerotheca fuliginea.* The plants are then placed in a greenhouse at approximately 23°C and a relative atmospheric humidity of approximately 70 %.

The test is evaluated 7 days after the inoculation. 0% means an efficacy which corresponds to that of the control, while an efficacy of 100% means that no disease is observed.

## Example F

### Venturia test (apples) / protective

| | |
|---|---|
| Solvent: | 24,5 parts by weight of acetone |
| | 24,5 parts by weight of dimethylacetamide |

(continued)

Emulsifier: 1 part by weight of alkylaryl polyglycol ether

To produce a suitable preparation of active compound, 1 part by weight of active compound is mixed with the stated amounts of solvent and emulsifier, and the concentrate is diluted with water to the desired concentration.

To test for protective activity, young plants are sprayed with the preparation of active compound at the stated rate of application. After the spray coating has dried on, the plants are inoculated with an aqueous conidia suspension of the causal agent of apple scab (*Venturia inaequalis*) and then remain for 1 day in an incubation cabinet at approximately 20°C and a relative atmospheric humidity of 100 %.

The plants are then placed in a greenhouse at approximately 21°C and a relative atmospheric humidity of approximately 90 %.

The test is evaluated 10 days after the inoculation. 0% means an efficacy which corresponds to that of the control, while an efficacy of 100% means that no disease is observed.

## Claims

**1.** A combination comprising

(A) at least one arylpyridazine according to formula (I)

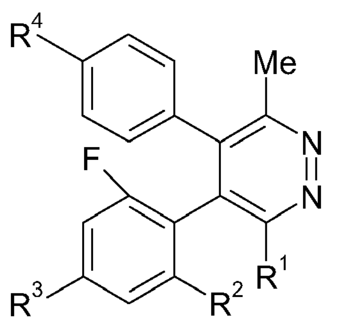

(I),

wherein

$R^1$ is selected from the group consisting of $C_1$-$C_4$-Alkyl and halogen and
$R^2$ is selected from the group consisting of hydrogen and halogen,
$R^3$ is selected from the group consisting of hydrogen, halogen and $C_1$-$C_4$-Alkoxy,
$R^4$ is selected from the group consisting of hydrogen, chlorine and methyl

and salts thereof,
and
(B) at least one further active compound selected from the group of inhibitors of ergosterol biosynthesis consisting of Aldimorph (1704-28-5), Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Dodemorph (1593-77-7), Dodemorph acetate (31717-87-0), Epoxiconazole (106325-08-0), Etaconazole (60207-93-4), Fenarimol (60168-88-9), Fenbuconazole (114369-43-6), Fenhexamid (126833-17-8), Fenpropidin (67306-00-7), Fenpropimorph (67306-03-0), Fluquinconazole (136426-54-5), Flurprimidol (56425-91-3) , Flusilazole (85509-19-9), Flutriafol (76674-21-0), Furconazole (112839-33-5), Furconazole-cis (112839-32-4), Hexaconazole (79983-71-4), Imazalil (60534-80-7), Imazalilsulfate (58594-72-2), Imibenconazole (86598-92-7), Ipconazole (125225-28-7), Metconazole (125116-23-6), Myclobutanil (88671-89-0), Naftifine (65472-88-0), Nuarimol (63284-71-9), Oxpoconazole (174212-12-5), Paclobutrazol (76738-62-0), Pefurazoate (101903-30-4), Penconazole (66246-88-6), Piperalin (3478-94-2), Prochloraz (67747-09-5), Propiconazole (60207-90-1), Prothioconazole (178928-70-6), Pyributicarb (88678-67-5), Pyrifenox (88283-41-4), Quinconazole (13970-75-8), Simeconazole (149508-90-7), Spiroxamine

(118134-30-8), Tebuconazole (107534-96-3), Terbinafine (91161-71-6), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4), Voriconazole (137234-62-9), 1-(4-Chlorphenyl)-2-(1H-1,2,4-triazol-1-yl)cycloheptanol (129586-32-9), Methyl 1-(2,2-dimethyl-2,3-dihydro-1H-inden-1-yl)-1H-imidazole-5-carboxylate (11323-95-0), O-{1-[(4-Methoxyphenoxy)methyl]-2,2-dimethylpropyl} 1H-imidazole-1-carbothioate (111226-71-2) and salts thereof.

**2.** Combination according to claim 1 wherein the arylpyridazine according to formula (I) is selected from the group consisting of 3-chloro-5-(4-chlorophenyl)-6-methyl-4-(2,4,6-trifluorophenyl)pyridazine (A-1), 3-chloro-5-(4-chlorophenyl)-6-methyl-4-(2,6-difluorophenyl) pyridazine (A-2), 3-chloro-5-(4-methylphenyl)-6-methyl-4-(2,,4,6-trifluorophenyl)pyridazine (A-3), 4-(4-chlorophenyl)-3,6-dimethyl-5-(2,4,6-trifluorophenyl-)pyridazine (A-4), 4-(4-chlorophenyl)-3,6-dimethyl-5-(2,6-difluorophenyl)pyridazine (A-5), 4-(4-methylphenyl)-3,6-dimethyl-5-(2,4,6-trifluorophenyl)pyridazine (A-6).

**3.** Combination according to claims 1 or 2 wherein mixing partners (B) are selected from the list consisting of triazoles, piperazines, pyridines, pyrimidines and imidazoles: Azaconazole (60207-31-0), Bitertanol (55179-31-2), Bromuconazole (116255-48-2), Cyproconazole (113096-99-4), Diclobutrazole (75736-33-3), Difenoconazole (119446-68-3), Diniconazole (83657-24-3), Diniconazole-M (83657-18-5), Epoxiconazole (106325-08-0), Etaconazole (60207-93-4), Fenarimol (60168-88-9), Fenbuconazole (114369-43-6), Fluquinconazole (136426-54-5), Flurprimidol (56425-91-3), Flusilazole (85509-19-9), Flutriafol (76674-21-0), Furconazole (112839-33-5), Furconazole-cis (112839-32-4), Hexaconazole (79983-71-4), Imazalil (60534-80-7), Imazalil-sulfate (58594-72-2), Imibenconazole (86598-92-7), Ipconazole (125225-28-7), Metconazole (125116-23-6), Myclobutanil (88671-89-0), Nuarimol (63284-71-9), Oxpoconazole (174212-12-5), Paclobutrazol (76738-62-0), Pefurazoate (101903-30-4), Penconazole (66246-88-6), Prochloraz (67747-09-5), Propiconazole (60207-90-1), Prothioconazole (178928-70-6), Pyrifenox (88283-41-4), Quinconazole (13970-75-8), Simeconazole (149508-90-7), Tebuconazole (107534-96-3), Tetraconazole (112281-77-3), Triadimefon (43121-43-3), Triadimenol (89482-17-7), Tridemorph (81412-43-3), Triflumizole (68694-11-1), Triforine (26644-46-2), Triticonazole (131983-72-7), Uniconazole (83657-22-1), Viniconazole (77174-66-4) and salts thereof.

**4.** Combination according to claims 1 or 2 wherein mixing partners (B) are selected from the list consisting of Bitertanol (55179-31-2), Epoxiconazole (106325-08-0), Fenpropidin (67306-00-7), Fenpropimorph (67306-03-0), Fluquinconazole (136426-54-5), Metconazole (125116-23-6), Prothioconazole (178928-70-6), Spiroxamine (118134-30-8) and Tebuconazole (107534-96-3), Triadimenol (89482-17-7) and salts thereof.

**5.** Combination according to claims 1 or 2 wherein mixing partners (B) are selected from the list consisting of Bitertanol (55179-31-2), Epoxiconazole (106325-08-0), Fluquinconazole (136426-54-5), Metconazole (125116-23-6), Prothioconazole (178928-70-6), Tebuconazole (107534-96-3) and Triadimenol (89482-17-7) and salts thereof.

**6.** Combination according to claims 1 or 2 wherein mixing partners (B) are selected from the list consisting of Fenpropidin (67306-00-7), Fenpropimorph (67306-03-0) and Spiroxamine (118134-30-8) and salts thereof.

**7.** Combination according to claims 1 to 6 comprising mixing partners (A):(B) in a weight ratio of 1:100 to 100:1.

**8.** Combination according to claims 1 to 7 being a fungicidally active combination.

**9.** A composition comprising a combination according to claims 1 to 8.

**10.** A composition according to claim 9 further comprising adjuvants, solvents, carrier, surfactants or extenders.

**11.** A method for curatively or preventively controlling the phytopathogenic fungi of plants or crops comprising the use of a fungicide composition according to claims 9 to 10 by application to the seed, the plant or to the fruit of the plant or to the soil in which the plant is growing or in which it is desired to grow.

**12.** The method according to claim 11 comprising applying the mixing partners (A) and (B) simultaneously or sequentially.

**13.** The method according to claims 11 or 12 wherein the amount of the combination of claims 1 to 8 is from 0.1 g/ha to 10 kg/ha for foliar and soil treatment and from 2 to 200 g/100 kg of seed for seed treatment.

**14.** Use of a combination according to any of claims 1 to 8 for the treatment of seed.

**15.** Use according to claim 14 for the treatment of transgenic seed.

**16.** Method for protecting a seed and/or shoots and foliage of a plant grown from the seed from damage by a pest or a fungus, the method comprising treating an unsown seed with a combination according to any of claims 1 to 8.

**17.** Method according to claim 16, wherein the seed is treated with component (A) at the same time that it is treated with component(s) (B).

**18.** Method according to claim 16, wherein the seed is treated with component A) at a different time than it is treated with component(s) (B).

**19.** Seed that has been treated with a combination according to any of claims 1 to 8.

European Patent Office

# EUROPEAN SEARCH REPORT

Application Number
EP 07 11 1583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | EP 1 767 529 A (SUMITOMO CHEMICAL CO [JP]) 28 March 2007 (2007-03-28)<br>* the whole document *<br>----- | 1-19 | INV.<br>A01N43/58<br>A01P3/00 |
| D,Y | EP 1 775 290 A (SUMITOMO CHEMICAL CO [JP]) 18 April 2007 (2007-04-18)<br>* the whole document *<br>----- | 1-19 | ADD.<br>A01N43/84<br>A01N43/653<br>A01N43/40<br>A01N43/30 |
| Y | EP 1 563 731 A (BAYER CROPSCIENCE SA [FR]) 17 August 2005 (2005-08-17)<br>* the whole document *<br>----- | 1-19 | |
| | | | TECHNICAL FIELDS SEARCHED (IPC) |
| | | | A01N |

The present search report has been drawn up for all claims

1

| Place of search | Date of completion of the search | Examiner |
|---|---|---|
| Munich | 4 October 2007 | Bertrand, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
&: member of the same patent family, corresponding document

EPO FORM 1503 03.82 (P04C01)

## ANNEX TO THE EUROPEAN SEARCH REPORT ON EUROPEAN PATENT APPLICATION NO. EP 07 11 1583

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2007

| Patent document cited in search report | Publication date | Patent family member(s) | Publication date |
| --- | --- | --- | --- |
| EP 1767529 A | 28-03-2007 | AU 2005252061 A1 | 22-12-2005 |
| | | WO 2005121104 A1 | 22-12-2005 |
| EP 1775290 A | 18-04-2007 | WO 2006001175 A1 | 05-01-2006 |
| EP 1563731 A | 17-08-2005 | CN 1917760 A | 21-02-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 05121104 A
- WO 06001175 A
- EP 040345 A
- EP 0316970 A
- US 4272417 A
- US 4245432 A
- US 4808430 A
- US 5876739 A
- US 20030176428 A1
- WO 2002080675 A1
- WO 2002028186 A2


### Non-patent literature cited in the description


- **R. WEGLER.** Chemie der Pflanzenschutz- and Schädlingsbekämpfungsmittel. Springer Verlag, 1970, vol. 2, 401-412
- **COLBY.** Calculation of the synergistic and antagonistic responses of herbicide combinations. *Weeds,* 1967, vol. 15, 20-22
- Isoboles, a graphic representation of synergism in pesticides. *Netherlands Journal of Plant Pathology,* 1964, vol. 70, 73-80